(19) Europäisches Patentamt
European Patent Office
Office européen des brevets

(11) **EP 1 712 852 B1**

(12) **EUROPÄISCHE PATENTSCHRIFT**

(45) Veröffentlichungstag und Bekanntmachung des Hinweises auf die Patenterteilung:
**22.08.2007   Patentblatt 2007/34**

(51) Int Cl.:
*F24J 2/05* *(2006.01)*          *F24J 2/10* *(2006.01)*

(21) Anmeldenummer: 06016603.0

(22) Anmeldetag: **04.11.2004**

(54) **Solarkollektor**

Solar collector

Collecteur solaire

(84) Benannte Vertragsstaaten:
**IT**

(30) Priorität: **04.11.2003   DE 10351474**

(43) Veröffentlichungstag der Anmeldung:
**18.10.2006   Patentblatt 2006/42**

(62) Dokumentnummer(n) der früheren Anmeldung(en) nach Art. 76 EPÜ:
**04797618.8 / 1 690 047**

(73) Patentinhaber: **Schott AG**
**55122 Mainz (DE)**

(72) Erfinder: **Eickhoff, Martin**
**04250 Pechina (Almeria) (ES)**

(74) Vertreter: **Fuchs**
**Patentanwälte**
**Postfach 46 60**
**65036 Wiesbaden (DE)**

(56) Entgegenhaltungen:
**WO-A-03/042609          US-A- 4 295 462**
**US-A- 4 703 749**

EP 1 712 852 B1

**Beschreibung**

Die Erfindung betrifft einen Solarkollektor mit einem Absorberrohr, mit einem Solarstrahlung auf das Absorberrohr fokussierenden Konzentrator und mit mindestens einem das Absorberrohr umgebenden strahlungsdurchlässigen Hüllrohr, wobei in Verbindungsbereichen zwischen den Hüllrohren Ausgleichsstücke für den Längenausgleich vorgesehen sind.

Unter Konzentratoren werden Einrichtungen verstanden, die die Solarstrahlung auf das Absorberrohr fokussieren. Es kann sich hierbei z.B. um optische Einrichtungen handeln. Bevorzugt sind Parabolspiegel, die als Rinne ausgeführt sind. Die an solchen Parabolrinnen reflektierte Strahlung wird in einer Brennlinie konzentriert, in der das Absorberrohr und das Hüllrohr angeordnet sind. Solche Parabolrinnen können auch aus mehreren Rinnensegmenten mit eigenen Krümmungsradien und mit eigenen Brennlinien bestehen.

Kommerzielle solare Hochtemperatur-Parabolrinnenkollektoren weisen starke optische Verluste an den Verbindungsbereichen der aus Glas bestehenden Hüllrohre auf. In den Verbindungsbereichen, in denen die Stützen an den Absorberrohren angreifen, sind die Hüllrohre unterbrochen, so dass diese Längenbereiche für die Energieabsorption nicht zur Verfügung stehen. Ein axial der Sonne nachgeführte Parabolrinnenkollektoren konzentrieren die eingestrahlte Solarenergie auf eine Brennlinie. In dieser verläuft ein Absorberrohrstrang, welcher von einem Wärmeübertragungsmedium, in der Regel Thermoöl oder Wasser, durchflossen wird. Ein Großteil der konzentrierten Solarstrahlung wird durch den Absorberrohrstrang in Wärmeenergie umgewandelt und an das Wärmeübertragungsmedium abgegeben. Um thermische Konvektionsverluste im Hochtemperaturbereich zu vermeiden, ist das heiße selektiv beschichtete Absorberrohr durch ein aus Glas bestehendes Hüllrohr umgeben, und der Zwischenraum zwischen Hüllrohr und Absorberrohr ist evakuiert. Aus Statik- und Festigkeitsgründen besteht der Absorberrohrstrang aus einer Vielzahl von Rohrstücken, die hintereinander angeordnet und miteinander verschweißt werden. An den Verbindungsbereichen greifen Metallstützen an, um das Absorberrohr in der Brennlinie des Parabolrinnenkollektors zu halten. Im bestrahlten Zustand dehnt sich das heiße Absorberrohr stärker als das kühlere Hüllrohr aus. Aus diesem Grund sind bei kommerziellen Absorberrohren, wie sie beispielsweise aus der WO 03/042609 bekannt sind, Ausgleichsstücke zwischen den Hüllrohren vorgesehen. Diese Ausgleichsstücke bestehen in der Regel aus Metallbälgen, welche die Distanz zwischen den Hüllrohren überbrücken und unterschiedliche Längenausdehnungen kompensieren. Die Ausgleichsstücke werden durch Strahlungsschutzelemente, wie. z. B. durch Aluminiumbleche, von der konzentrierten Solarstrahlung abgeschattet, um vor allem die Glas-Metall-Schweißverbindungen vor zu hohen Temperaturgradienten zu schützen.

Kommerzielle solare Hochtemperatur-Parabolrinnenkollektoren weisen an den Absorberrohr-Verbindungsbereichen starke optische Verluste auf. Wegen der Notwendigkeit von flexiblen Glas-Metallübergängen und des Platzbedarfs der Stützen können die Verbindungsbereiche nicht als aktive Absorberrohroberfläche ausgeführt werden, und die ankommende konzentrierte Solarstrahlung kann nicht vom System aufgenommen werden. Durch diesen inaktiven Bereich gehen etwa 5 bis 6% der von den Parabolspiegeln reflektierten Strahlung verloren. Eine Nutzung der im inaktiven Bereich eingestrahlten Strahlung erscheint wegen des sich ständig verändernden Einfallswinkels sehr kompliziert.

Der Erfindung liegt die Aufgabe zugrunde, einen Solarkollektor mit verbesserter Ausnutzung der einfallenden Strahlungsenergie zu schaffen.

Der erfindungsgemäße Sonnenkollektor weist die Merkmale des Patentanspruchs 1 auf. Hiernach ist in den Verbindungsbereichen mindestens ein das Hüllrohr umgebender Spiegelkragen angeordnet.

Der Spiegelkragen bildet einen Sekundärreflektor, der die konzentrierte Solarstrahlung vom Verbindungsbereich in den Bereich aktiver Absorberrohrfläche reflektiert. Der ganz oder teilweise umlaufende Spiegelkragen hat die Fähigkeit, die aus verschiedenen Richtungen von den Parabolspiegeln kommende konzentrierte Solarstrahlung auch bei verschiedenen Sonneneinfallswinkeln auf die aktive Absorberrohrfläche zu reflektieren. Durch den Spiegelkragen kann zwar ein Teil der Absorberrohrlänge überdeckt werden, jedoch wird die auf diesen Teil treffende Solarstrahlung durch Sekundärreflektion in den absorbierenden Längenbereich des Absorberrohres geleitet.

Gemäß einer ersten Ausführungsform ist in den Verbindungsbereichen ein das Hüllrohr umgebender Spiegelkragen mit einer sich ganz oder teilweise um den Umfang der Hüllrohre erstreckenden Konusform angeordnet.

Die Konusform des Spiegelkragens bedeutet, dass der Durchmesser des Spiegelkragens sich in Längsrichtung des Absorberrohrs verringert bzw. der Spiegelkragen sich in einer bestimmten Richtung verjüngt. Diese Verjüngung kann kegelförmig sein, jedoch auch von einer Kegelform abweichen, und beispielsweise leicht konkav oder konvex geformt sein.

Es ist auch nicht erforderlich, dass der Spiegelkragen sich über den gesamten Umfang des Hüllrohres bzw. des Absorberrohres erstreckt. Er muss nur den Bereich abdecken, der für den Sonneneinfall in Betracht kommt und aus diesem Bereich die Strahlung auf das abgrenzende Hüllrohr bzw. durch dieses Hüllrohr hindurch auf das Absorberohr lenken.

Der Spiegelkragen kann zwei gegeneinander gesetzte gegensinnige Konusflächen aufweisen. In diesem Fall wird auftreffende Strahlung entweder nach entgegengesetzten Seiten des Absorberrohrs reflektiert, oder ein Teil der Strahlung trifft den Spiegelkragen und ein anderer Teil geht an dem Spiegelkragen vorbei. Die beiden Konusflächen können unterschiedliche Konuswinkel haben. Auf der nördlichen Erdhalbkugel hat vorzugsweise die nach Süden gerichtete Konusfläche den größeren Konuswinkel, während die nach Norden gerichtete Konusfläche einen kleineren Konuswinkel hat. Der Konuswinkel gibt die Steilheit der Konusfläche in Bezug auf die Achse des Absorberrohres an.

Vorzugsweise ist vorgesehen, dass die Spiegelkragen die Ausgleichsstücke bzw. die Strahlungsschutzelemente in Längsrichtung der Hüllrohre ganz oder teilweise überdecken. Hierbei bildet der Spiegelkragen nicht nur einen Reflektor, sondern auch eine Art Schutzgehäuse für den Verbindungsbereich und die darin enthaltenen Ausgleichsstükke.

Gemäß einer weiteren Ausführungsform ist vorgesehen, dass der Spiegelkragen mindestens eine plane Fläche aufweist.

Plane Flächen haben gegenüber einer Konusfläche den weiteren Vorteil, dass die Strahlung nicht divergent reflektiert wird, sondern dass die Reflektion einer optischen Achsenschrift entspricht. Hierbei bleibt der Focus innerhalb der Brennlinie erhalten, wodurch eine weitere Leistungssteigerung erreicht werden kann.

Die plane Fläche ist vorzugsweise senkrecht zur Achse des Hüllrohrs ausgerichtet.

Vorzugsweise ist die plane Fläche eine Ringfläche. Die Ringfläche kann sich über den gesamten Umfang des Hüllrohres oder als Teilringfläche nur über einen Abschnitt erstrecken.

Eine bevorzugte Ausführungsform sieht mehrere plane Flächen vor, die auf einem Konus angeordnet sind. Man erhält auf diese Weise plane Facettenflächen, deren Einhüllende einen Kegel bilden. Diese Anordnung ist insbesondere dann von Vorteil, wenn der Konzentrator eine Parabolrinne ist, die aus mehreren Parabolsegmenten besteht, die jeweils eigene Krümmungsradien aufweisen. Vorzugsweise ist jeweils mindestens eine plane Fläche jeweils einem Parabolsegment zugeordnet. Dies bedeutet, dass die plane Fläche derart auf der Konusfäche angeordnet ist, das die zum Parabolsegment gehörende Brennlinie auf der betreffende planen Fläche auftrifft.

Vorzugsweise sind jeweils zwei plane Flächen einem Parabolsegment zugeordnet. Hierbei ist die eine Fläche des Flächenpaares auf dem der Parabolrinne abgewandten Hälfte des Konus und die zweite Fläche auf der der Parabolrinne zugewandten Hälfte des Konus angeordnet.

Da vorzugsweise zwei bis vier Parabolsegmente vorgesehen sind, weist der Spiegelkragen dementsprechend vorzugsweise vier bis acht plane Flächen auf.

Das Verhältnis h durch L liegt vorzugsweise zwischen 0,3 bis 1, wobei h die Höhe des Spiegelkragens senkrecht zur Achse des Hüllrohres und L die Länge des Verbindungsbereiches bezeichnet. Das Verhältnis ist vorzugsweise so zu wählen, dass die Verschattungslänge V ganzjährig kleiner ist als die Länge L des Verbindungsbereiches. Dies hängt wiederum vom Ort, wo der Sonnenkollektor installiert ist und somit vom Winkel der Sonneneinstrahlung, ab.

Der Spiegelkragen besteht vorzugsweise aus Aluminium.

Im Folgenden werden unter Bezugnahme auf die Zeichnungen Ausführungsbeispiele der Erfindung näher erläutert. Die Beschreibung spezieller Ausführungsbeispiele beschränkt nicht den Schutzbereich der Erfindung.

Es zeigen:

Fig. 1            eine perspektivische Darstellung eines Parabolrinnenkollektors,

Fig. 2            eine Darstellung der Einzelheit II aus Fig. 1 zur Verdeutlichung der Konstruktion des Verbindungsbereiches mit einem umlaufenden Spiegelkragen.

Fig. 3            eine Ausführungsform mit einem halbkreisförmigen Spiegelkragen,

Fig. 4            eine Ausführungsform mit einem halbkreisförmigen dualen Spiegelkragen,

Fig. 5, 6 u. 7     unterschiedliche Situationen des Strahlungseinfalls bei dem Spiegelkragen der Fig. 4,

Fig. 8            eine Zeichnung mit Angabe der verschiedenen Längen und Winkel,

Fig. 9            eine perspektivische Darstellung einer Absorberrohranordnung mit Hüllrohr und Spiegelkragen mit ebener Fläche,

Fig. 10a        eine perspektivische Darstellung eines Parabolrinnenkollektor mit mehreren Parabolsegmenten,

Fig. 10b        eine schematische Seitenansicht der in Fig. 9 und 10a gezeigten Anordnung,

Fig. 11           einen Spiegelkragen mit mehreren planen Flächen,

Fig. 12           die Seitenansicht der in Fig. 11 gezeigten Anordnung und

Fig. 13          eine schematische Darstellung der in den Figuren 11 und 12 dargestellten Anordnung, und

Fig. 14-19          Diagramme zur Veranschaulichung des solaren Gewinnes.

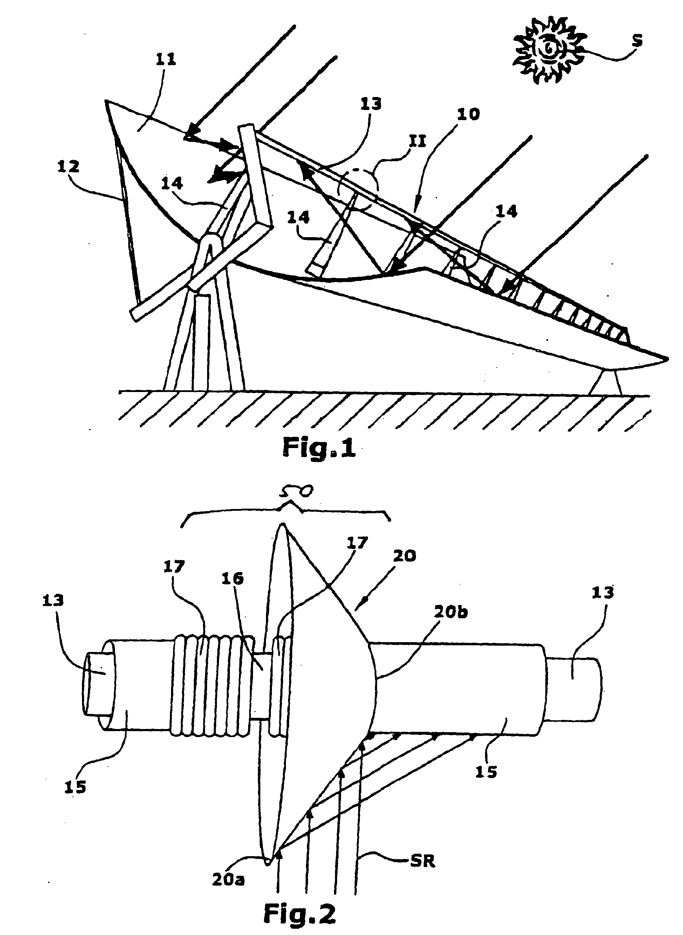

In Fig. 1 ist ein Parabolrinnenkollektor 10 dargestellt, der einen langgestreckten Parabolreflektor 11 von parabelförmigem Profil aufweist. Der Parabolreflektor 11 ist mit einer aus einem Fachwerk bestehenden Tragstruktur 12 versehen. Längs der Brennlinie des Parabolreflektors 11 erstreckt sich ein Absorberrohr 13, das an Stützen 14 befestigt ist, welche mit dem Parabolreflektor verbunden sind. Der Parabolreflektor bildet mit den Stützen 14 und dem Absorberrohr 13 eine Einheit, die um die Achse des Absorberohres geschwenkt und dadurch dem Stand der Sonne S einachsig nachgeführt wird. Die von der Sonne S einfallende parallele Solarstrahlung wird von dem Parabolreflektor 11 auf das Absorberrohr 13 fokussiert. Das Absorberrohr wird von einem Wärmeübertragungsmedium, z.B. Wasser oder Öl, durchflossen und durch die absorbierte Solarstrahlung erhitzt. Am Austrittsende des Absorberrohres kann das Wärmeübertragungsmedium entnommen und einem Wärmeaustauscher oder einem anderen Energieverbraucher zugeführt werden.

Fig. 2 zeigt das Absorberrohr 13, das aus mehreren Rohrabschnitten besteht und von Hüllrohren 15 aus Glas umgeben ist. Die Hüllrohre 15 dienen dazu, thermische Konvektionsverluste und Wärmestrahlungsverluste im Hochtemperaturbereich zu vermindern. Der Zwischenraum zwischen dem Absorberrohr 13 und dem Hüllrohr 15 ist evakuiert. Aus Statik- und Festigkeitsgründen besteht der Absorberrohrstrang aus einer Vielzahl von Absorberrohren, die miteinander verbunden sind. An den Verbindungsstellen 16 greifen jeweils die Stützen 14 an. Die Verbindungsstellen 16 sind daher nicht von dem Hüllrohr 15 bedeckt. Im bestrahlten Zustand dehnt sich das heiße Absorberrohr 13 stärker aus als das kühlere Hüllrohr 15. Aus diesem Grund sind Ausgleichsstücke 17 in Form eines Metallbalges an den Absorberrohrenden eingeschweißt. Die Ausgleichsstücke 17 gewährleisten einen flexiblen Metall-Glasübergang, um so die verschiedenen Längenausdehnungen zu kompensieren.

Erfindungsgemäß ist in dem Verbindungsbereich zwischen zwei benachbarten Hüllrohren 15 ein das Absorberrohr bzw. das Hüllrohr 15 umgebender Spiegelkragen 20 angeordnet, der bei diesem Ausführungsbeispiel eine um 360° umlaufende Kegelstumpfform hat. Der Spiegelkragen 20 ist außen verspiegelt. Er weist ein breites Konusende 20a großen Durchmessers und gegenüberliegend ein schmales Konusende 20b kleineren Durchmessers auf. Der Durchmesser des Konusendes 20b ist gleich dem Außendurchmesser des Hüllrohrs 15. Der Spiegelkragen 20 schließt sich an das Ende des Hüllrohrs 15 an, und er bedeckt den Verbindungsbereich 50 zum benachbarten Hüllrohr 15 auf mindestens einem Teil der Rohrlänge. Bei dem vorliegenden Ausführungsbeispiel ist ein Ausgleichsstück 17 in dem von dem Spiegelkragen umschlossenen Hohlraum enthalten. Ein zweiter (nicht dargestellter) Spiegelkragen kann sich jenseits der Verbindungsstelle 16 befinden und den anderen Faltenbalg 17 bedecken. Die beiden Spiegelkragen sind dann mit ihren großen Enden 20a einander zugewandt. Dazwischen befindet sich die Stütze 14.

Die Spiegelkragen 20 haben die Wirkung, dass die einfallende Sonnenstrahlung SR an der konischen Spiegelfläche reflektiert und auf das angrenzende Absorberrohr 13 geworfen wird. Man erkennt, dass die dem Verbindungsbereich zwischen den Rohren auftreffende Solarstrahlung SR durch den Spiegelkragen 20 auf den exponierten Bereich des Absorberrohres 13 umgelenkt wird und durch das Hüllrohr 15 hindurch zum Absorberrohr gelangt. Auf diese Weise wird die Energieausbeute des Parabolrinnenkollektors 10 verbessert.

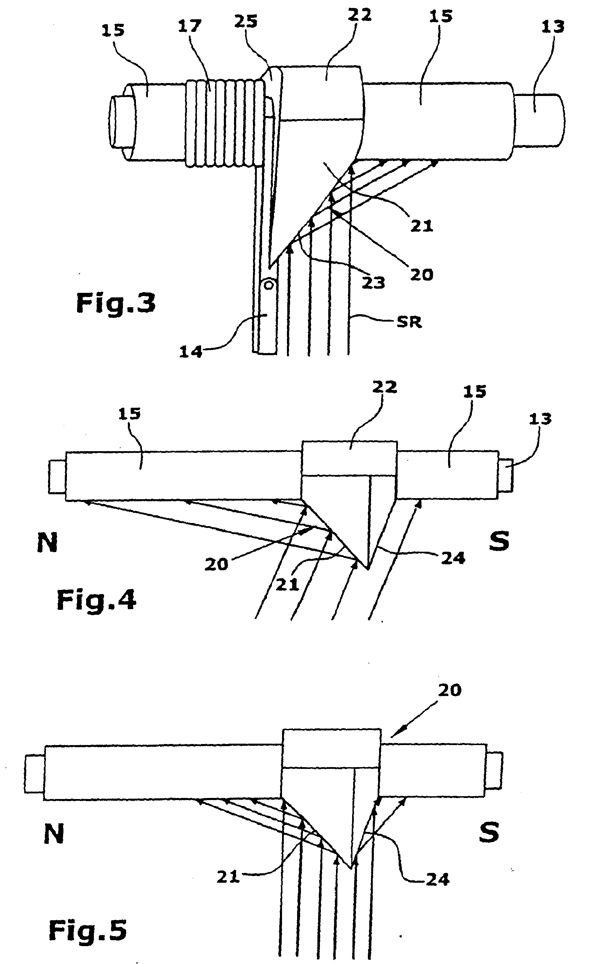

Fig. 3 zeigt ein Ausführungsbeispiel, bei dem der Spiegelkragen 20 sich nur etwa um die Hälfte des Umfangs des Hüllrohres 15 erstreckt und einen etwa halbkreisförmigen kegelförmigen Bereich 21 aufweist, dessen Enden durch einen ebenfalls etwa halbkreisförmigen flachen Bereich 22 verbunden sind, so dass von den Bereichen 21 und 22 das Hüllrohr 15 um 360° umfangen wird. Der kegelförmige Bereich 21 weist eine verspiegelte Reflektionsfläche 23 auf, die die Sonnenstrahlung SR auf den angrenzenden Bereich des Absorberrohres 13 umlenkt. In Fig. 3 ist die Stütze 14 erkennbar, die das Absorberrohr 13 hält. Beidseitig der Stütze 14 sind die Ausgleichsstücke 17 angeordnet, von denen in Fig. 3 nur eines sichtbar ist, während das andere von dem Spiegelkragen 20 verdeckt ist. Im fertigen Zustand sind zwei Spiegelkragen 20 vorhanden, von denen jeder eines der Ausgleichsstücke bedeckt. Zwischen den beiden Spiegelkragen befindet sich eine thermische Isolierung 25.

In der Praxis werden Solarkollektoren hauptsächlich in Nord-Süd-Richtung ausgerichtet und axial der Sonne von Osten nach Westen nachgeführt, um den maximalen jährlichen Ertrag zu erzielen. Zu verschiedenen Jahres- und Tageszeiten ergeben sich standortabhängig unterschiedliche Einfallswinkel aus nördlicher bzw. südlicher Richtung. Die Figuren 4-7 zeigen das Strahlungsverhalten eines Nord-Süd ausgerichteten Parabolrinnenkollektors bei unterschiedlichen Einfallswinkeln für einen Standort in Südeuropa.

Dem Ausführungsbeispiel der Figuren 4 - 7 liegt ein Spiegelkragen 20 zugrunde, der eine erste Konusfläche 21 und eine zweite Konusfläche 24 aufweist, welche mit ihren großen Enden Rücken an Rücken gegeneinander gesetzt sind. Die beiden Konusflächen 21 und 24 sind Halbkegel, die sich um den halben Umfang erstrecken. Der doppelte Spiegelkragen 20 nach Fig. 4 erstreckt sich über den gesamten Verbindungsbereich, so dass er beide Ausgleichsstücke 17 überdeckt.

Der Sachverhalt, dass im Idealfall auch bei verschiedenen Einfallswinkeln die gesamte aus verschiedenen Richtungen von den Parabolspiegeln kommende konzentrierte Strahlung auf die Brennlinie trifft, hat zur Folge, dass auch bei verschiedenen Einfallswinkeln am Absorberrohr ein sternförmiger und daher rotationssymmetrischer Einstrahlungsfall vorliegt, dessen Rotationsachse mit der Brennlinie im Absorberrohr zusammenfällt. Da der Spiegelkragen im Prinzip rotationssymmetrisch zur Brennlinie ausgeführt ist, ist der in den Figuren 4 - 7 eingezeichnete Strahlengang aus rotationssymmetrischen Gründen repräsentativ für alle anderen radial einfallenden Strahlengänge.

Fig. 4 zeigt das Strahlungsverhalten eines doppelt ausgeführten Spiegelkragens 20 am Morgen und am Abend im Sommer. Die Solarstrahlung SR fällt steil von Norden her ein and trifft vornehmlich auf die nach Norden gewandte große Kegelfläche 21, von der sie auf das Absorberrohr reflektiert wird. In diesem Zustand hat die Kegelfläche 24 keine wesentliche Reflektionswirkung.

Fig. 5 zeigt das Strahlungsverhalten des Spiegelkragens über den Tag im Sommer. Im Sommer trifft die reflektierte Strahlung fast über den ganzen Tag senkrecht oder mit geringem Einfallswinkel auf. Beide Kegelflächen 21 und 24 wirken reflektierend.

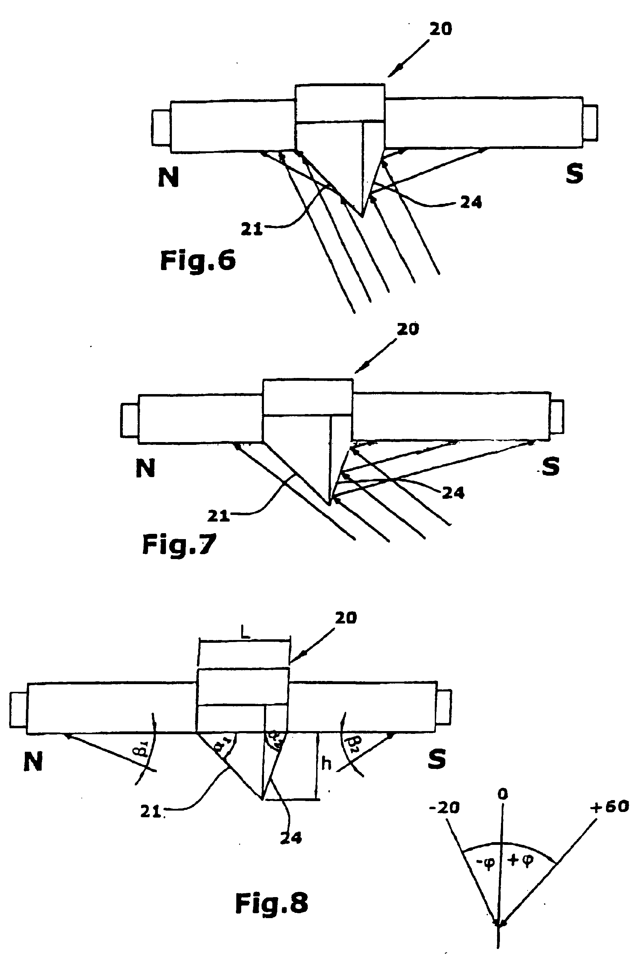

Fig. 6 zeigt das Strahlungsverhalten eines doppelt ausgeführten Spiegelkragens im Herbst und Frühjahr. Die Strahlung kommt schräg aus südlicher Richtung und trifft beide Kegelflächen 21 und 24, die die Strahlung auf das Absorberrohr reflektieren.

Fig. 7 zeigt das Strahlungsverhalten eines doppelt ausgeführten Spiegelkragens 20 im Winter. Die Strahlung fällt mit geringem Einfallswinkel von Süden her ein, also im wesentlichen parallel zu der Kegelfläche 21. Die Strahlung trifft mit großem Einfallswinkel auf die Kegelfläche 24 und wird von dieser auf das Absorberrohr reflektiert.

Fig. 8 zeigt die Anstellwinkel des nördlichen und südlichen Spiegelkragens, die den lokalen Einfallswinkeln wie folgt angepasst werden.

Es bedeuten

$\alpha 1$ = Anstellwinkel des Nordspiegelkragens

$\alpha 2$ = Anstellwinkel des Südspiegelkragens

$\phi$ = Sonneneinfallswinkel

$\beta 1$ = nördliche Absorberauftreffwinkel der vom Kragen reflektierten Strahlung

$\beta 2$ = südliche Absorberauftreffwinkel der vom Kragen reflektierten Strahlung

h = Kragenhöhe

L = Länge des Absorberrohrverbindungsstücks = Länge des Verbindungsbereichs

Daraus ergeben sich gemäß Fig. 8 die folgenden Beziehungen:

$$\beta 1 = 2^{\ast}\alpha 1 - 90° + \Phi \qquad (-20° < \Phi < 90° - \alpha 1) \qquad (1)$$

$$\beta 2 = 2^{\ast}\alpha 2 - 90° - \Phi \qquad (\alpha 2 - 90° < \Phi < +60°) \qquad (2)$$

$$h = \frac{L}{\dfrac{1}{\tan(\alpha 1)} + \dfrac{1}{\tan(\alpha 2)}} \qquad (3)$$

Für den Standort Südeuropa liegen die Einfallswinkel hauptsächlich zwischen $\Phi$ = -20° und $\Phi$ = +60°. In diesem Intervall wird etwa 97% der Solarenergie auf den Kollektor eingestrahlt. Berücksichtigt man einen Auftreffwinkel von etwa 10° für noch ausreichend bei extremen Einfallswinkeln, so ergibt sich nach den in Fig. 8 dargestellten Abhängigkeiten ein nördlicher Anstellwinkel von $\alpha 1$ = 60° und ein südlicher Anstellwinkel von $\alpha 2$ = 80° für den Spiegelkragen. In einem Parabolrinnenkraftwerk wird der Großteil der Solarenergie im Bereich von $\Phi$ = 10° bis $\Phi$ = 20° eingestrahlt. In diesem Bereich ergeben sich für die beschriebenen Anstellwinkel relativ große Auftreffwinkel von 50° bis 60°. Bei großen Auftreffwinkeln ist die Distanz zwischen dem Spiegelkragen und dem aktiven Absorberrohr geringer und die Treffsicherheit des Spiegelkragens größer.

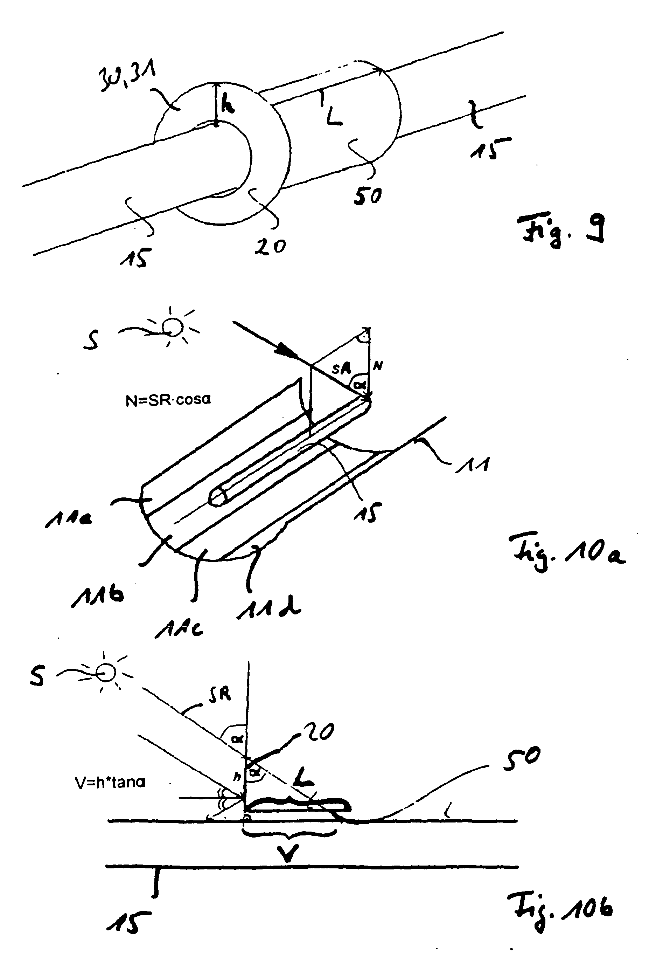

In der Fig. 9 ist schematisch in perspektivischer Darstellung eine Anordnung mit Absorberrohren und Hüllrohren 15 dargestellt, wobei der Verbindungsbereich 50, in dem die Ausgleichselemente angeordnet sind, durch ein isoliertes Strahlungsschutzelement abgedeckt ist. Dieser Verbindungsbereich bzw. das isolierte Strahlungsschutzelement 50 besitzt die Länge L. Am linken Ende des Verbindungsbereiches 50, das dem südlichen Ende des Verbindungsbereichs 50 bei einer Installation auf der Nordhalbkugel entspricht, ist ein Spiegelkragen 20 angeordnet, der eine plane Fläche 30 in Form eines senkrecht zur Rohrachse angestellten Ringes 31 aufweist. Mit h wird die Höhe des Rings 31 bezeichnet.

In der Fig. 10a ist eine Ausführungsform mit einem Parabolreflektor 11 dargestellt, der vier Parabolsegmente 11a -11d aufweist. Die zu den Parabolsegmenten gehörenden Brennlinien sind in der Fig. 10a nicht dargestellt, liegen jedoch im Bereich des Absorberrohrs bzw. Hüllrohrs 15. Die Solarstrahlung SR fällt unter dem Winkel $\alpha$ ein, der auch in der Figur 10b eingezeichnet ist.

In der Fig. 10b sind zur Veranschaulichung der mathematischen Beziehung V = h x tan($\alpha$) die in den Fig. 9 und 10a dargestellte Anordnung schematisch in Seitenansicht zu sehen. $\alpha$ bezeichnet den Einfallswinkel der Solarstrahlung, L die Länge des Verbindungsbereichs und V die Verschattungslänge. Bei der in Fig. 10b gezeigten Anordnung ist V kleiner als die Länge L, so dass bei dem dargestellten Einfallswinkel $\alpha$ das Hüllrohr 15 rechts vom Verbindungsbereich 50 nicht abgeschattet wird.

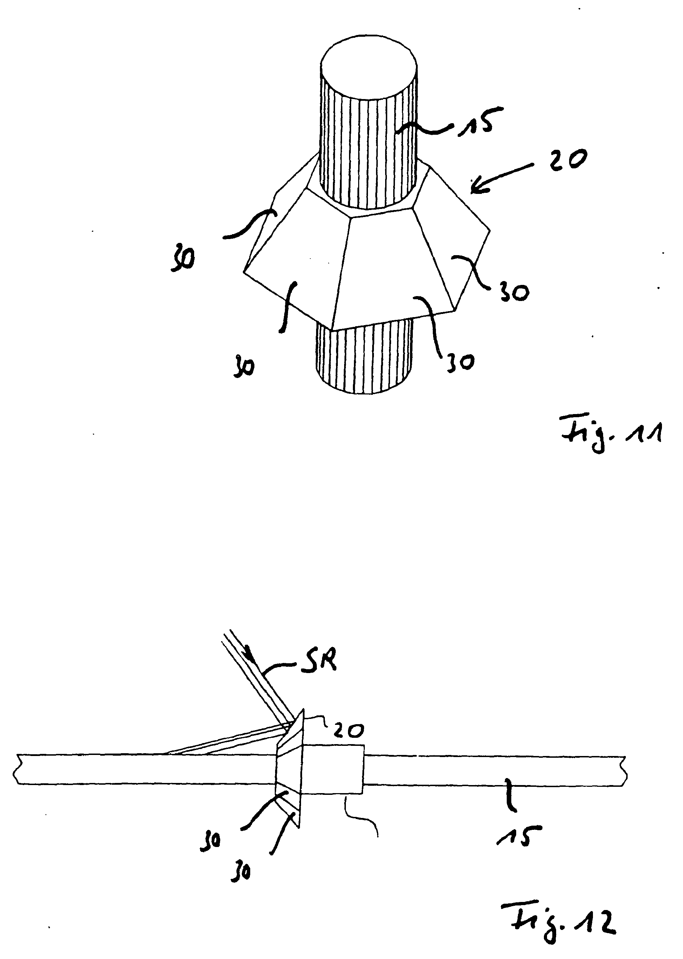

In der Fig. 11 ist eine weitere Ausführungsform des Spiegelkragens 20 dargestellt, der insgesamt sechs plane Flächen 30 aufweist, die zur Achse des Hüllrohrs 15 geneigt angeordnet sind. Die planen Flächen 30 bilden Facettenflächen auf einer Konusfläche.

In der Fig. 12 ist diese Anordnung noch einmal in Seitenansicht dargestellt, wobei zusätzlich die einfallende Solarstrahlung SR eingezeichnet ist.

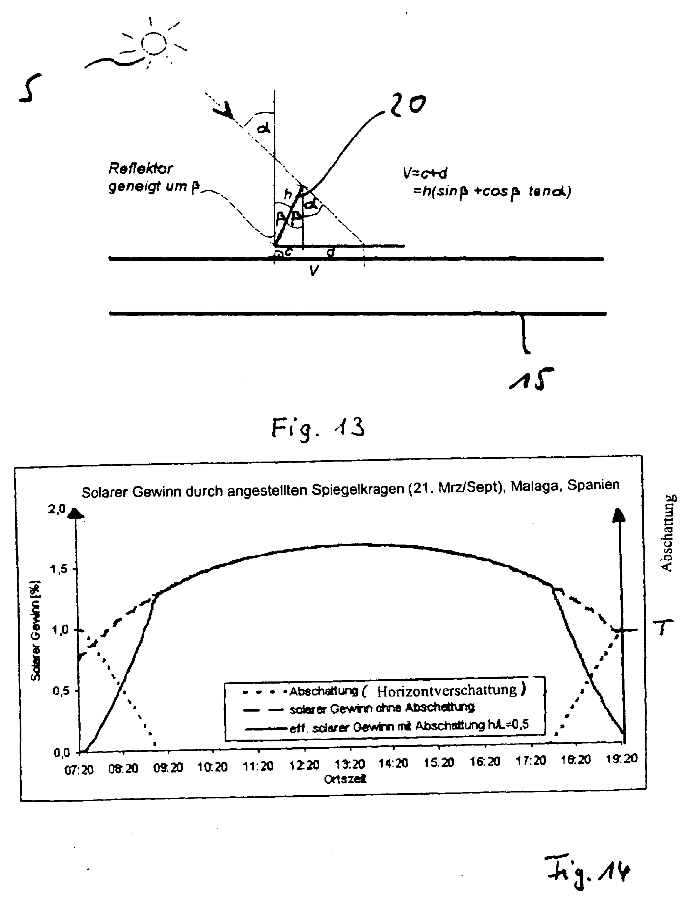

In der Fig. 13 ist diese Anordnung zur Verdeutlichung der mathematischen Beziehungen noch einmal in Seitenansicht dargestellt. Die Verschattungslänge V ergibt sich aus V = c + d = h (sin$\beta$ + cos$\beta$ • tan$\alpha$), wobei $\beta$ die Neigung des Spiegelkragens 20 bzw. die Neigung der planen Flächen 30 des Spiegelkragens 20 bezeichnet.

Durch Anbringen eines solchen mit planen Flächen versehenen Spiegelkragens im Verbindungsbereich 50 zwischen zwei benachbarten Rohren wird der optische Wirkungsgrad gesteigert, indem Strahlung, die sonst auf den Verbindungsbereich auftrifft und zum Parabolspiegel zurückreflektiert würde, zusätzlich auch auf das Hüllrohr bzw. das Absorberrohr gelenkt wird.

Der Spiegelkragen 20 wird bei einer Installation auf der Nordhalbkugel auf der Südseite des Übergangsbereiches angebracht. Der Spiegelkragen kann unter dem Winkel $\beta$ von 90° als Ringscheibe 31 bis zu einem Winkel $\beta$ von 45° als Spiegelkragen 20 mit planen Flächen 30 angeordnet werden.

Bei einem Winkel $\beta$ von 90° sind die Gewinne im Winter am höchsten, für kleinere Winkel erhöhen sich die Gewinne im Sommer, während sich die Gewinne im Winter verkleinern. Die Höhe der Gewinne und Verluste ist von der geographischen Lage, der Orientierung des Solarkollektors und vom Abstand der Höhe der benachbarten Solarkollektoren abhängig, was als Horizontverschattung bezeichnet wird.

Das folgende Fallbeispiel wurde für den Standort Malaga, Nordsüdausrichtung des Solarkollektors und einer Horizontverschattung von 15° berechnet.

In der Fig. 14 ist die Abschattung (Horizontverschattung) in Abhängigkeit von der Ortszeit für den 21. März/ September dargestellt. Der Wert T auf der rechten y-Achse bezeichnet die totale Verschattung durch den oder die benachbarten Solarkollektoren.

Ohne Berücksichtigung der Horizontverschattung erhält man die Kurve, die als "solarer Gewinn ohne Abschattung" bezeichnet wird. Berücksichtigt man die Abschattung (Horizontverschattung) so erhält man die durchgezogene Kurve, die den effektiven solaren Gewinn darstellt. Hierbei wurde ein Verhältnis von h durch L von 0,5 gewählt. Der solare Gewinn ist auf die absorbierte Energie einer Anordnung ohne Spiegelkragen bezogen.

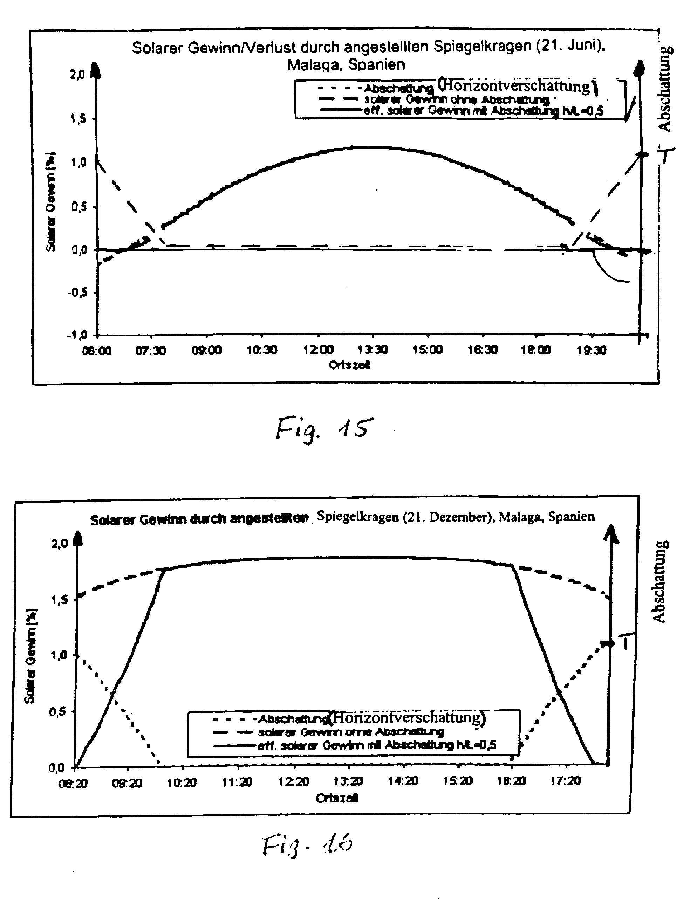

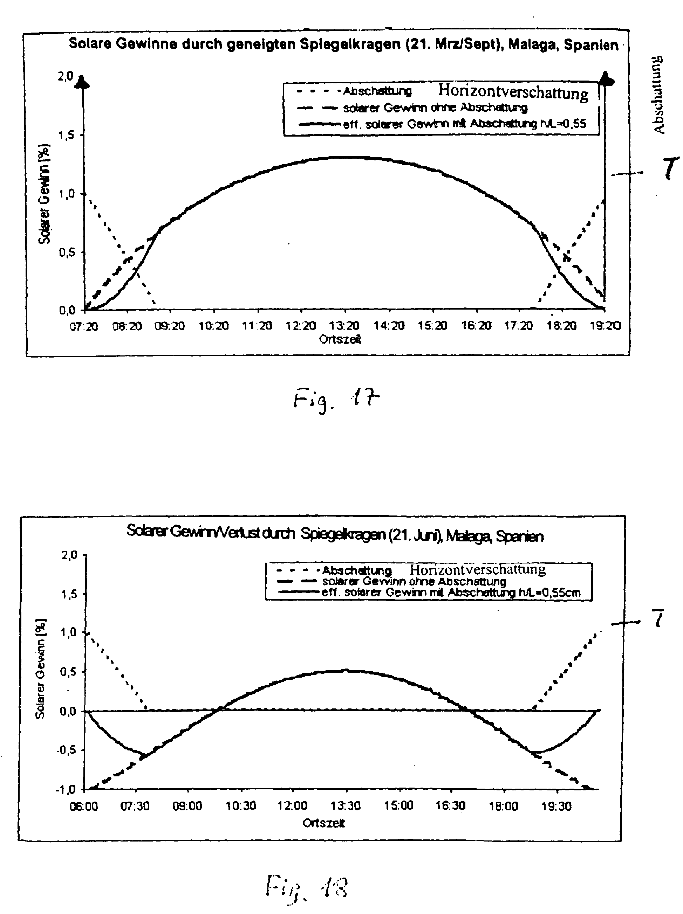

Die Fig. 15 und 16 zeigen die entsprechenden Kurven für den 21. Juni und für den 21. Dezember.

Die Fig. 17 bis 19 zeigen entsprechende Diagramme für das Verhältnis h/L von 0,55.

Das Verhältnis h/L = 0,55 hat zur Folge, dass die Verschattungslänge V ganzjährig kleiner ist als die Länge L des Verbindungsbereiches, wie dies in der Fig. 10b dargestellt ist. Dadurch entstehen nur solare Gewinne und Verluste auf der Südseite des Verbindungsbereiches. Es entstehen keine Verluste durch Verschattung des Absorberrohres auf der Nordseite. Verluste entstehen im Sommer in den Morgen- und Abendstunden. In dieser Zeit ist der Solarkollektor durch die Horizontverschattung teilverschattet, wodurch sich die leistungsbezogenen Verluste vermindern.

Am 21. Juni sind Gewinne und Verluste etwa gleich groß. Für alle anderen Tage vergrößern sich die Gewinne und verringern sich die Verluste. Im Winterhalbjahr gibt es nur Gewinne auf der Südseite. Ist das Verhältnis h durch L größer 0,55, so erhöhen sich die Gewinne im Sommerhalbjahr. Gleichzeitig entstehen im Winterhalbjahr Verluste durch Verschattung des Absorberrohrs auf der Nordseite.

Der Spiegelkragen kann auch in einem Winkel $\beta$ < 90° zur Achse des Hüllrohrs montiert werden. Hierdurch erhöhen sich die Gewinne im Sommerhalbjahr und die Verluste in den Morgen- und Abendstunden werden verringert. Durch die einzelnen planen Flächen 30 wird eine optische Aufweitung der Fokuslinie verhindert.

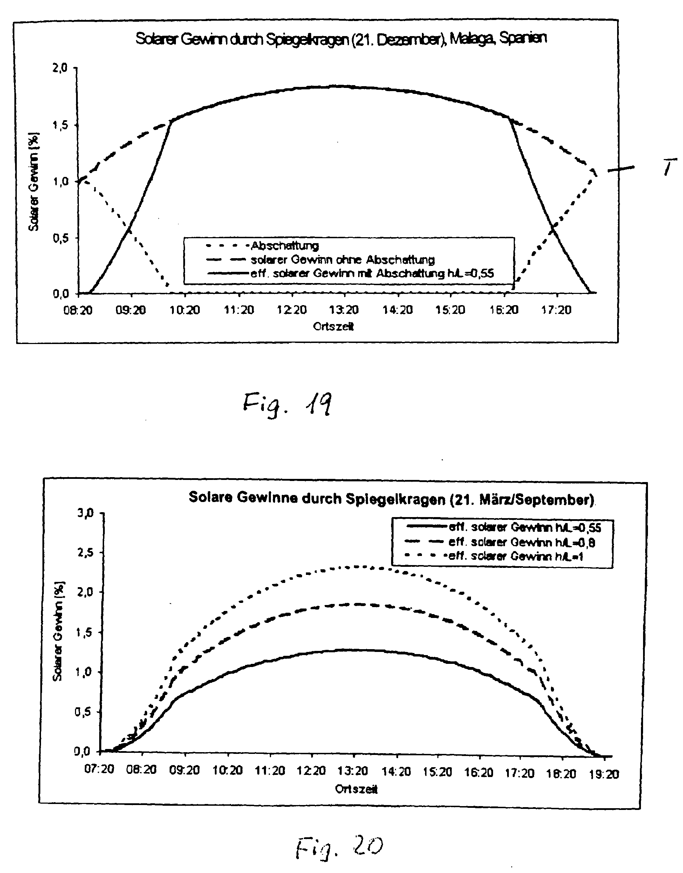

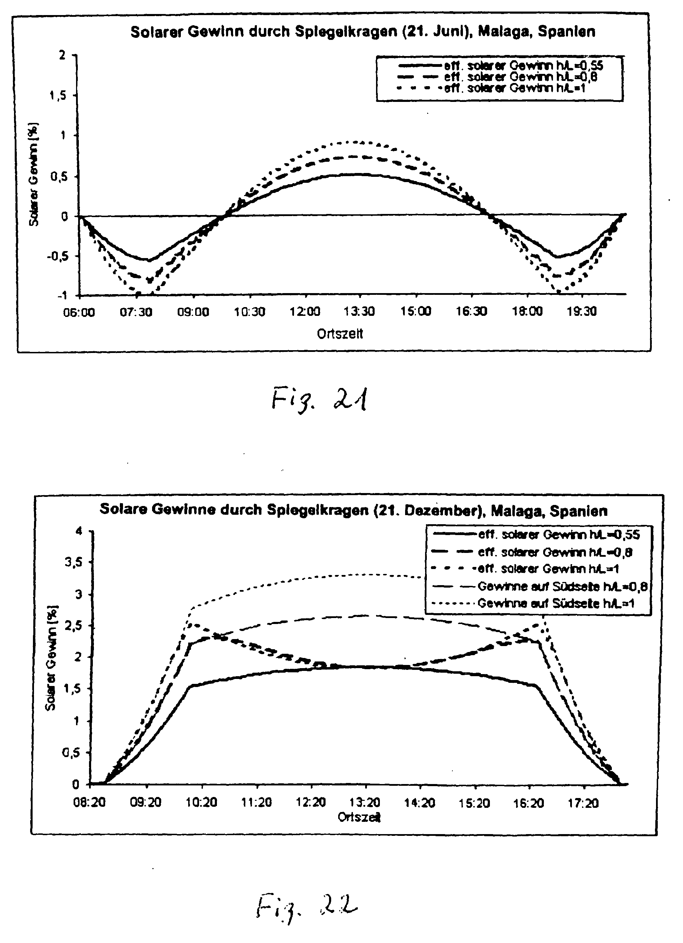

In den Fig. 20 bis 22 sind die effektiven solaren Gewinnkurven für unterschiedliche Verhältnisse h/L für drei Werte, nämlich h/L = 0,55, h/L = 0,8 und h/L = 1 dargestellt. In der Fig. 22 sind zusätzlich noch die Gewinne auf der Südseite für 0,8 und für h/L = 1 dargestellt.

**Bezugszeichenliste**

| | |
|---|---|
| 10 | Parabolrinnenkollektor |
| 11 | Parabolreflektor |
| 11a-d | Parabolsegmente |
| 12 | Tragstruktur |
| 13 | Absorberrohr |
| 14 | Stütze |
| 15 | Hüllrohr |
| 17 | Ausgleichsstücke |
| 20 | Spiegelkragen |
| 20a | breites Konusende |
| 20b | schmales Konusende |
| 21,24 | Konusflächen |
| 22 | flacher Bereich |
| 23 | Reflektionsfläche |
| 30 | Fläche |
| 31 | Ringfläche |
| 50 | Verbindungsbereich |
| | |
| S | Sonne |
| SR | Sonnenstrahlung |

**Patentansprüche**

1. Parabolrinnenkollektor mit einem an Stützen (14) befestigten Absorberrohr (13), einem Solarstrahlung auf das Absorberrohr (13) fokussierenden Parabolreflektor (11) und mehreren das Absorberrohr (13) umgebenden strahlungsdurchlässigen Hüllrohren (15), wobei in Verbindungsbereichen zwischen den Hüllrohren (15) Ausgleichstücke (17) für den Längenausgleich vorgesehen sind, **dadurch gekennzeichnet, dass** in den Verbindungsbereichen (50) ein das Hüllrohr (15) umgebender Spiegelkragen (20) mit einer sich ganz oder teilweise um den Umfang der Hüllrohre (15) erstreckenden Konusform angeordnet ist.

2. Parabolrinnenkollektor nach Anspruch 1, **dadurch gekennzeichnet**, das der Spiegelkragen (20) aus zwei gegeneinander gesetzten gegensinnigen Konusflächen (21,24) besteht.

3. Parabolrinnenkollektor nach Anspruch 2, **dadurch gekennzeichnet, dass** die Konusflächen (21,24) unterschiedliche Konuswinkel haben.

4. Parabolrinnenkollektor nach einem der Ansprüche 1-3, **dadurch gekennzeichnet, dass** die Spiegelkragen (20) die Ausgleichsstücke (17) in Längsrichtung der Hüllrohre (15) ganz oder teilweise überdecken.

5. Parabolrinnenkollektor nach Anspruch 4, **dadurch gekennzeichnet, dass** zwei gegeneinander gesetzte Spiegelkragen (20) einen Verbindungsbereich über seine gesamte Länge umhüllen.

6. Parabolrinnenkollektor nach einem der Ansprüche 1-5, **dadurch gekennzeichnet, dass** der Spiegelkragen (20) sich um etwa die Hälfte des Umfangs des Hüllrohres (15) erstreckt.

7. Parabolrinnenkollektor nach einem der Ansprüche 1-6, **dadurch gekennzeichnet, dass** der Parabolreflektor (11) im Sonnenstand einachsig nachgeführt ist.

**Claims**

1. Parabolic trough collector with an absorber tube (13) which is attached to supports (14), a parabolic reflector (11) which focuses solar radiation onto the absorber tube (13), and a plurality of radiation-transmissive cladding tubes (15) surrounding the absorber tube (13), compensating pieces (17) for length compensation being provided in connecting regions between the cladding tubes (15), **characterized in that** a mirror collar (20), which surrounds the cladding tube (15) and has the shape of a cone extending completely or partly around the circumference of the cladding tubes (15), is arranged in the connecting regions (50).

2. Parabolic trough collector according to Claim 1, **characterized in that** the mirror collar (20) comprises two conical surfaces (21, 24) positioned opposite one another and in opposite directions.

3. Parabolic trough collector according to Claim 2, **characterized in that** the conical surfaces (21, 24) have different cone angles.

4. Parabolic trough collector according to one of Claims 1-3, **characterized in that** the mirror collars (20) completely or partly cover the compensating pieces (17) in the longitudinal direction of the cladding tubes (15).

5. Parabolic trough collector according to Claim 4, **characterized in that** two mirror collars (20) positioned opposite one another envelope a connecting region over its entire length.

6. Parabolic trough collector according to one of Claims 1-5, **characterized in that** the mirror collar (20) extends around approximately half the circumference of the cladding tube (15).

7. Parabolic trough collector according to one of Claims 1-6, **characterized in that** the parabolic reflector (11) tracks the position of the sun about a single axis.

**Revendications**

1. Collecteur à canaux parabolique comprenant un tube absorbeur (13) fixé à des montants (14), un réflecteur parabolique (11) qui concentre le rayonnement solaire sur le tube absorbeur (13) et plusieurs tubes d'enveloppe (15) perméables au rayonnement qui entourent le tube absorbeur (13), des éléments compensateurs (17) pour la compensation de la longueur étant prévus dans les zones de liaison entre les tubes d'enveloppe (15), **caractérisé en ce que** dans les zones de liaison (50) est disposé un collet réfléchissant (20) entourant le tube d'enveloppe (15) et ayant une forme conique qui s'étend totalement ou partiellement autour du pourtour des tubes d'enveloppe (15).

2. Collecteur à canaux parabolique selon la revendication 1, **caractérisé en ce que** le collet réfléchissant (20) se compose de deux surfaces coniques (21, 24) disposées l'une contre l'autre en sens inverse.

3. Collecteur à canaux parabolique selon la revendication 2, **caractérisé en ce que** les surfaces coniques (21, 24) ont des angles de cône différents.

4. Collecteur à canaux parabolique selon l'une des revendications 1 à 3, **caractérisé en ce que** les collets réfléchissants (20) recouvrent totalement ou partiellement les éléments compensateurs (17) dans le sens longitudinal des tubes d'enveloppe (15).

5. Collecteur à canaux parabolique selon la revendication 4, **caractérisé en ce que** deux collets réfléchissants (20) disposés l'un contre l'autre entourent une zone de liaison sur toute sa longueur.

6. Collecteur à canaux parabolique selon l'une des revendications 1 à 5, **caractérisé en ce que** le collet réfléchissant (20) s'étend sur environ la moitié du pourtour du tube d'enveloppe (15).

7. Collecteur à canaux parabolique selon l'une des revendications 1 à 6, **caractérisé en ce que** le réflecteur parabolique (11) poursuit la position du soleil sur un axe.

**Fig.1**

**Fig.2**

**Fig.3**

**Fig.4**

**Fig.5**

**Fig.6**

**Fig.7**

**Fig.8**

Fig. 9

$N = SR \cdot \cos\alpha$

Fig. 10a

$V = h \cdot \tan\alpha$

Fig. 10b

Fig. 11

Fig. 12

$$V = c + d$$
$$= h(sin\beta + cos\beta \; tan\alpha)$$

Reflektor geneigt um $\beta$

**Fig. 13**

Solarer Gewinn durch angestellten Spiegelkragen (21. Mrz/Sept), Malaga, Spanien

- - - - Abschattung ( Horizontverschattung )
— — solarer Gewinn ohne Abschattung
——— eff. solarer Gewinn mit Abschattung h/L=0,5

Ortszeit

**Fig. 14**

Fig. 15

Fig. 16

**Solare Gewinne durch geneigten Spiegelkragen (21. Mrz/Sept), Malaga, Spanien**

Legende:
- - - - Abschattung  Horizontverschattung
- — — solarer Gewinn ohne Abschattung
- ——— eff. solarer Gewinn mit Abschattung h/L=0,55

Y-Achse: Solarer Gewinn [%]
X-Achse: Ortszeit (07:20 bis 19:20)

Fig. 17

**Solarer Gewinn/Verlust durch Spiegelkragen (21. Juni), Malaga, Spanien**

Legende:
- - - - Abschattung  Horizontverschattung
- — — solarer Gewinn ohne Abschattung
- ——— eff. solarer Gewinn mit Abschattung h/L=0,55cm

Y-Achse: Solarer Gewinn [%]
X-Achse: Ortszeit (06:00 bis 19:30)

Fig. 18

**Fig. 19**

**Fig. 20**

**Fig. 21**

**Fig. 22**

**EP 1 712 852 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03042609 A